**Europäisches Patentamt**

**European Patent Office**

**Office européen des brevets**

(19)

(11) Veröffentlichungsnummer : **0 380 971 B1**

# (12) EUROPÄISCHE PATENTSCHRIFT

(45) Veröffentlichungstag der Patentschrift :
**30.09.92 Patentblatt 92/40**

(51) Int. Cl.$^5$ : **D03D 27/10, B65G 15/34**

(21) Anmeldenummer : **90100986.0**

(22) Anmeldetag : **18.01.90**

(54) **Transportband.**

(30) Priorität : **21.01.89 DE 8900626 U**

(43) Veröffentlichungstag der Anmeldung :
**08.08.90 Patentblatt 90/32**

(45) Bekanntmachung des Hinweises auf die
Patenterteilung :
**30.09.92 Patentblatt 92/40**

(84) Benannte Vertragsstaaten :
**BE CH DE ES FR GB IT LI NL SE**

(56) Entgegenhaltungen :
**EP-A- 0 051 750**
**EP-A- 0 280 118**
**BE-A- 710 171**
**FR-A- 403 884**

(73) Patentinhaber : **PARABEAM Industrie- en
Handelsonderneming B.V.
Hoogeindsestraat 49
NL-5705 AL Helmond (NL)**

(72) Erfinder : **André de la Porte, Gilles
Pallandtlaan, Bar.V.5,
NL-Rozendaal (NL)**
Erfinder : **Van der Vleuten, Peter
Gezellestraat 3
NL-5421 PE Gemert (NL)**

(74) Vertreter : **Sparing - Röhl - Henseler
Patentanwälte
Rethelstrasse 123 Postfach 14 02 68
W-4000 Düsseldorf 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Transportband bestehend aus einer gewebeverstärkten Kunststoffbahn mit in Längsrichtung sich erstreckenden textilen Verstärkungseinlagen aus sich kreuzenden Kett- und Schußfäden.

Derartige Transportbänder sind bekannt zur Beförderung von Gegenständen in einer Vielzahl von Bereichen. Je nach Art der zu transportierenden Gegenstände, wie z.B. Gepäck auf Flughäfen, Lebensmittel an den Kassen in Supermärkten, Schüttgüter im Bergbau usw., müssen diese Förderbänder unterschiedlichen Anforderungen genügen. In Längsrichtung wird wegen der im allgemeinen recht langen Förderstrecken eine geringe Dehnbarkeit zusammen mit einer Biegbarkeit für eine Führung entlang einer Antriebs- und Umlenktrommel gefordert. In Querrichtung wird für glatt laufende Förderbänder eine hohe Steifigkeit verlangt. Die als Zug- und Festigkeitsträger wirkenden textilen Einlagen bestimmen dabei im wesentlichen die Eigenschaften eines Transportbandes hinsichtlich Zugfestigkeit, Dehnbarkeit und Quersteifigkeit. Durch die Verwendung mehrschichtig eingelegter Flachgewebe wird versucht, die gewünschte Festigkeit bei hoher Lebensdauer zu erreichen. Mit der Anzahl der Gewebelagen steigt allerdings die Dicke des Transportbandes, was sich nachteilig auf das Antriebssystem auswirkt. Die verschiedenen Gewebelagen neigen dazu, gegeneinander zu verrutschen, wodurch eine Dehnung des Materials unvermeidbar ist. Auch die Einbettung der Gewebelagen bereitet bezüglich der notwendigen Anbindung mittels Durchtränkung mit Kunststoff oder Gummi Schwierigkeiten. In der EP-A- 0 280 118 ist deshalb vorgesehen, Fäden für das Weben des Textilgewebes zu verwenden, welche bereits ganz oder teilweise von einer Schicht aus Gummi oder gummiähnlichem Werkstoff umschlossen sind, wodurch die Bindung der Deckschichten an die Einbettungsschicht verbessert werden soll. Durch den Einsatz vorbehandelter Fäden ist die Herstellung derartiger Transportbänder aufwendig. Außerdem wird nur die Anbindung des Zug- und Festigkeitsträgers verändert und nicht dessen Eigenschaftsprofil für das Transportband. Die Notwendigkeit der Einlagerung mehrerer textiler Einlagen bleibt.

Für glattlaufende Förderbänder werden zur Erzielung der gewünschten Gesamtfestigkeit auch hochfeste Garne für die textilen Einlagen verwendet. Diese geben dem Gewebe eine geringe Dehnung und hohe Reißfestigkeit in Längs- und Querrichtung, verlangen aber den Einsatz teurer Garne. Die Quersteifigkeit dieser Förderbänder ist aber bei ein- oder zweischichtig eingelegten Flachgeweben noch unzureichend, so daß Gegenstände mit höherem Gewicht eine Muldung des Förderbandes bewirken. Dies ist beispielsweise nachteilig für entlang des Transportweges vorgesehene Bearbeitungs- oder Verpackungsstationen. Darüberhinaus genügt die Laufruhe und die damit verbundene Geräuschentwicklung nicht den Anforderungen an eine umweltfreundliche Beförderung von Gegenständen.

Aus der EP-A-0 051 750 ist schließlich ein Fördergurt bekannt, der als einzigen Festigkeitsträger in Längsrichtung mit gegenseitigen Abständen parallel zueinander durchlaufende Stahlseiten enthält. Zusätzlich ist in die obere und/oder untere Deckschicht ein luftgefüllter Hohlkörper als dämpfende Polstereinlage eingebettet, um die Aufprallenergie von stückigem Fördergut abzufangen. Gebildet wird die Polstereinlage von einem Doppelgewebe mit zwei Gewebebahnen, die durch ganzflächig verteilte Polfäden parallel zueinander auf Abstand gehalten sind und über die gesamte Gurtlänge an den Seitenkanten nach außen abgeschlossen sind. Eine solche aus Verbundgewebe hergestellte Polstereinlage ermöglicht zwar die Aufnahme eines Luftvolumens, kann jedoch keine Zugkräfte aufnehmen. Wegen der Beweglichkeit des mit Abstand ausgebildeten Doppelgewebes ist vielmehr eine eigene zugfeste Verstärkungseinlage erforderlich. Insbesondere die Quersteifigkeit bleibt auch trotz Verstärkungseinlage unzureichend, was für glattlaufende Transportbänder nachteilig ist.

Aufgabe der Erfindung ist es daher, ein Transportband nach dem Oberbegriff des Anspruchs 1 zu schaffen, das zur sicheren Beförderung von Gegenständen eine gute Gesamtfestigkeit besitzt und dabei einfach aufgebaut ist.

Diese Aufgabe wird gemäß dem kennzeichnenden Teil des Anspruchs 1 dadurch gelöst, daß die Verstärkungseinlage gebildet wird von einem Festigkeitsträger in Form eines Doppelpolgewebes mit Ober- und Untergewebe, die über niedrige, an den Schußfäden abgebundene Polfäden derart zusammengezogen sind, daß eine zugfeste Einheit aus Ober und Untergewebe gebildet wird, wobei die Polfäden bei Biegebeanspruchung des Transportbandes eine in Kettrichtung rückstellbare, geringe Beweglichkeit von Ober- und Untergewebe gegeneinander zulassen.

Hierdurch wird ein Transportband geschaffen, das durch die Einlagerung eines dreidimensionalen, stabilen Gewebes als einzige Verstärkungseinlage dem Transportband eine konstante Länge verleiht bei einer hohen Steifigkeit und Durchschlagfestigkeit, während eine verbleibende Biegbarkeit in Längsrichtung die Umlenkbarkeit des Förderbandes gewährleistet. Die verwendete Doppelpol-Gewebeeinlage ist geeignet, hohe Zugkräfte aufzunehmen, wobei die Polfäden die beiden Gewebelagen sicher miteinander verankern, so daß ein guter Festigkeitsträger resultiert. Dabei können die beiden Gewebelagen des Doppelpolgewebes aufeinanderliegend verbunden sein oder reibschlüssig in Eingriff stehen. Je nach Länge der Polfäden zwischen 0,1 und 2 mm können die Gewebelagen des Doppelpolgewebes eine lagefixierte oder lagegeführte Stellung einnehmen, bei der die Polflächen eine Rückstellkraft aufbauen. Die physikalischen Eigenschaften des Transportbandes wie Temperatur-, Ermüdungs-, Witterungs- und Alterungsbeständigkeit, Unempfindlichkeit gegen die Einwirkung von Chemikalien, Schwerbrennbarkeit, Art der Verbrennungsgase usw. können durch die Wahl der Rohstoffe für die Garne der Kett-, Schuß- und Polfäden an die besonderen Anforderungen des Einsatzbereiches angepaßt werden und sind nicht mehr vorbestimmt durch notwendigerweise zu benutzende hochfeste Garne.

Die Steifigkeit in Querrichtung kann durch die Verwendung von Monofilamenten als Schußfäden noch zusätzlich verbessert werden, während das Verweben von Multifilamenten als Kettfäden die Biegbarkeit in Längsrichtung verbessert.

Der bei der Umlenkung eines Transportbandes auftretende sogenannte Krimpeffekt mit seinen Zug- und Druckbeanspruchungen wird von dem dreidimensionalen Gewebe abgeleitet. Insbesondere durch eine versetzte Anordnung benachbarter Polfäden können die angreifenden Kräfte umgelagert werden.

Als Garne verwendbar sind insbesondere Garne aus synthetischen Fasern, wie Polyamidfasern, Acrylfasern, Polyesterfasern, Polyvinylchloridfasern usw.. Polyamidfasern sind laugen-, seewasser- und fäulnisfest und besitzen eine hohe Reiß- und Scheuerfestigkeit. Wegen ihrer hohen Elastizität sind sie bisher jedoch nur als Schußfäden für muldenbildende Transportbänder verwendet worden. Hitzebeständiger als Polyamidfasern sind Acrylfasern, die wegen ihrer geringen Festigkeit bisher kaum eingesetzt wurden. Polyesterfasern besitzen als hervorstechenste Eigenschaften einen sehr hoch liegenden Schmelzpunkt, hervorragendes Rücksprungvermögen, geringe Dehnung und geringe Feuchtigkeitsaufnahme sowie Wetterbeständigkeit. Polyvinylchloridfasern, sind wegen ihres hohen Chlorgehalts unbrennbar, unentflammbar, ersticken sogar Feuer und sind damit insbesondere für Untertage-Bergbau-Einsatz geeignet. Desweitern sind auch Mischfasern, z.B. aus Polyester und Baumwolle oder Polyamid und Zellwolle, einsetzbar. Ebenfalls einsetzbar sind hochfeste Fasern, wie z.B. Aramid.

Bei dem Transportband handelt es sich im allgemeinen um ein endloses Transportband, das mit seiner Laufseite über mindestens eine Antriebs- und Umlenkrolle sowie entlang Halterungsrollen geführt ist. Zur Verbesserung der Laufruhe kann vorgesehen sein, daß diese Transportbandlaufseite von einer Flordecke einer Plüschgewebebahn gebildet wird, die laufseitig mit nach außen gerichteter Flordecke sowie in Längsrichtung laufend an dem Transportband angebracht sein kann.

Zur Verhinderung einer elektrostatischen Aufladung kann diese Flordecke mit elektrisch leitfähigen Flornoppen besetzt sein oder mindestens teilweise von Flornoppen aus leitfähigen Garnen gebildet sein.

Auch mehrere Gewebeeinlagen aus einem Doppelpolgewebe können benachbart und mit Abstand zueinander in Längsrichtung verlaufend angeordnet sein, wobei diese Doppelpolgewebe sich zudem mit Flachgewebeeinlagen abwechseln oder von diesen außen- und innenseitig eingeschlossen sein.

Weitere Ausgestaltungen der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.

Fig. 1 zeigt teilweise einen Längsschnitt eines ersten Ausführungsbeispiels des Transportbandes,

Fig. 2 zeigt teilweise einen Längsschnitt eines zweiten Ausführungsbeispiels des Transportbandes,

Fig. 3 zeigt teilweise einen Längsschnitt eines dritten Ausführungsbeispiels des Transportbandes,

Fig. 4 zeigt teilweise einen Längsschnitt eines vierten Ausführungsbeispiels des Transportbandes,

Fig. 5 zeigt teilweise einen Längsschnitt eines fünften Ausführungsbeispiels des Transportbandes,

Fig. 6 zeigt teilweise einen Längsschnitt eines sechsten Ausführungsbeispiels des Transportbandes,

Fig. 7 zeigt teilweise einen Längsschnitt eines siebten Ausführungsbeispiels des Transportbandes.

Die in den Figuren dargestellten Teilbereiche verschiedener Ausführungsbeispiele eines Transportbandes 1 betreffen ein sogenanntes endloses Gleitband, das auch auf langen Förderstrecken glatt läuft. Je nach Anwendungszweck liegt die Breite des Bandes zwischen 1 und 300 cm, so daß auch flache Antriebsriemen aus diesem Band herstellbar sind.

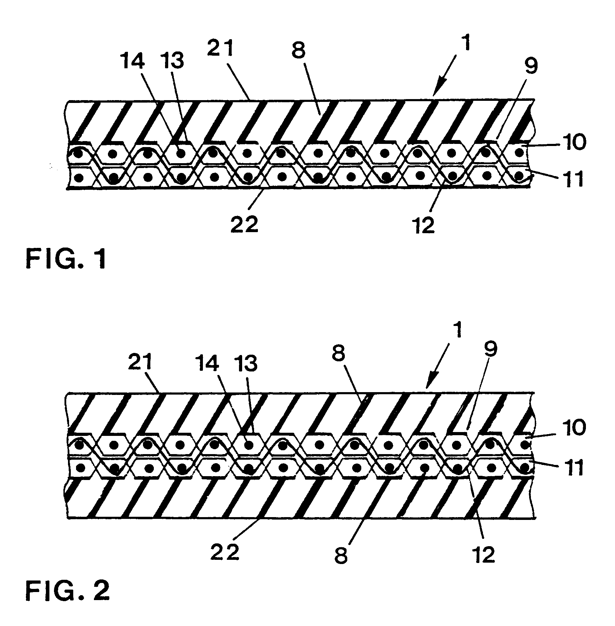

Gemäß Fig. 1 besteht ein erstes Ausführungsbeispiel des Transportbandes 1 aus einer eine obere Deckschicht bildenden Kunststoffbahn 8, an die als Festigkeitsträger eine einzige Verstärkungseinlage in Form einer Gewebeeinlage 9 haftend gelegt ist. An der Oberseite der Kunststoffbahn 8 befindet sich die Tragseite 21 des Transportbandes 1, während an der Unterseite der Gewebeeinlage 9 die Laufseite 22 des Transportbandes 1 ausgebildet ist.

Die Gewebeeinlage 9 besteht aus einem dreidimensionalen, unaufgeschnittenen Doppelpolgewebe, das ein Obergewebe 10 und ein Untergewebe 11 sowie zwischen dem Ober- und Untergewebe hin- und herwechselnde, niedrig gewählte Polfäden 12 umfaßt. Mittels der Polfäden 12 sind das Ober- und Untergewebe 10 und 11 zusammengezogen und damit dicht miteinander verbunden. Diese Verankerung der beiden Gewebelagen ist eine Verbindung mit geringer Verschiebbarkeit in Kettrichtung von Ober- und Untergewebe unter Biegebeanspruchung. Als Zugelemente dienen längs- und querliegende Fadensysteme (Kett- und Schußfäden), die durch das Polfadensystem lagefixiert zu einer Einheit miteinander verzahnt sind. Außerdem können die Polfäden 12 der Spannungsableitung dienen. Vorzugsweise sind die Polfäden 12 derart niedrig ausgebildet, daß das Obergewebe 10 und das Untergewebe 11 abstandslos aufeinander liegend verbunden sind. Im übrigen liegt die Länge der Polfäden 12 bei 0,1 bis 2 mm zwischen zwei Abbindungsstellen.

Jeweils in Leinwandbindung verkreuzte Kettfäden 13 und Schußfäden 14 bilden das Ober- und Untergewebe 10 und 11. Die Polfäden 12 sind durch eine 2V Schuß Polaufbindung eingebunden. Je nach gewünschter Dichte der Polfäden 12 zwischen dem Ober- und Untergewebe 10 und 11 können die Polfäden 12 auch durch eine 2/4V oder 3/6W Schuß Polaufbindung eingebunden sein. In Richtung der Schußfäden 14 können benachbarte Polfäden 12 jeweils an demselben Schußfaden 14 abgebunden sein oder an verschiedenen Schußfäden 14, wobei letztere Alternative eine gleichmäßigere Verteilung angreifender Kräfte bewirken kann. Die Zahl der Polfäden liegt zwischen 5 und 20 pro cm Breite. Die Gewebeeinlage 9 erstreckt sich mit ihren Kettfäden 10 in Längsrichtung des Transportbandes 1, während die Schußfäden 14 in Querrichtung des Transportbandes 1 liegen. Ist wie in Fig. 1 dargestellt, die Kunststoffbahn 8 nur an der Tragseite 21 vorgesehen, so daß das Untergewebe 11 die Laufseite des Transportbandes 1 auf einer Antriebsrolle oder Umlenkungsrolle bildet, kann durch die Verwendung leitfähiger Garne für das Untergewebe 11 elektrostatischen Aufladungen entgegengewirkt werden.

Als Garne sind Multifilamente eingesetzt, die eine Biegbarkeit in Längsrichtung gewährleisten. Für eine hohe Steifigkeit in Querrichtung werden die Schußfäden 14 vorzugsweise von Monofilamenten gebildet. Die Garnstärke liegt im Bereich zwischen 10 und 600 tex, vorzugsweise 100 - 180 tex.

Als Fasermaterial dient Polyester. Andere synthetische Fasern, wie z.B. Polyamid, Polypropylen usw. sowie Mischfasern sind ebenfalls verwendbar. Gleiches gilt für die hochfesten Fasern, wie z.B. Aramid.

Die Kunststoffbahn 8 besteht aus einem elastomeren Kunststoff, vorzugsweise Gummi oder PVC. Für eine intensive Verbindung von Gewebe und Kunststoff können bekannte Gummierungs- und Beschichtungsverfahren eingesetzt werden.

Fig. 2 zeigt ein zweites Ausführungsbeispiel des Transportbandes 1 mit ebenfalls nur einer Verstärkungseinlage in Form einer Gewebeeinlage 9, die hier allerdings mittig zwischen einer oberen und unteren Deckschicht der Kunststoffbahn 8 angeordnet ist. Ober- und unterseitig können auch verschieden dicke Schichten der Kunststoffbahn 8 aufgebracht sein. Eine zur Tragseite 21 oder Laufseite 22 des Transportbandes 1 verschobene Einbettung der Gewebeeinlage 9 resultiert daraus. Im übrigen entspricht die Ausbildung des Transportbandes 1 dem vorstehend beschriebenen ersten Ausführungsbeispiel.

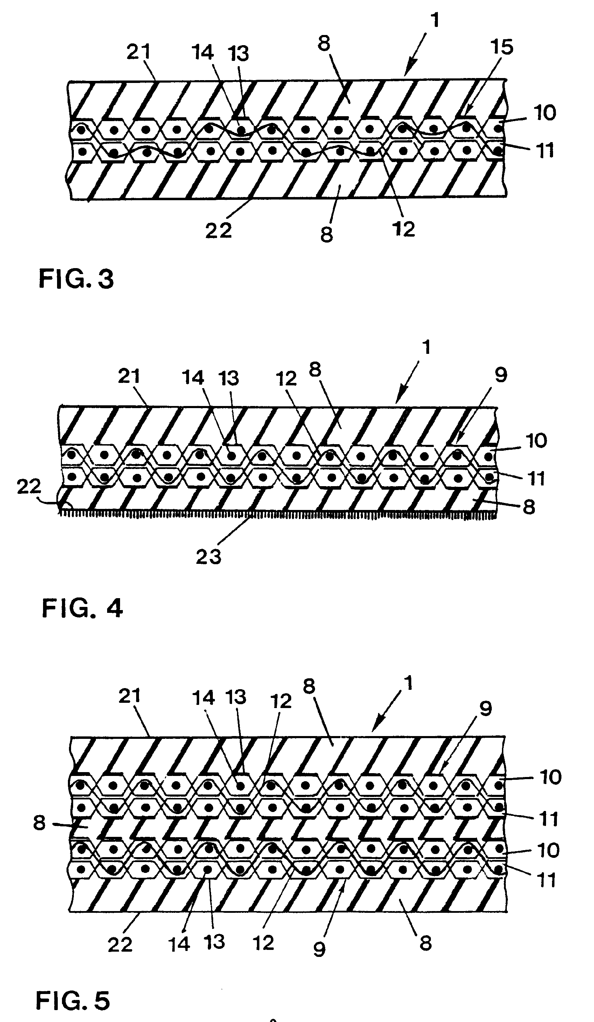

Fig. 3 zeigt ein drittes Ausführungsbeispiel des Transportbandes 1 mit einer Gewebeeinlage 15, die bis auf die Abbindung der Polfäden 12 dem vorstehend beschriebenen zweiten Ausführungsbeispiel entspricht. Die Polfäden 12 sind hier mittels einer 3/6W Schuß Poldurchbindung abgebunden. Die Polfäden 12 können je nach gewünschter Dichte ebenso durch eine 3/8W, 4/8W Schuß Poldurchbindung das Ober- und Untergewebes 10 und 11 verbinden.

Fig. 4 zeigt ein viertes Ausbildungsbeispiel des Transportbandes 1, das sich durch das zweite Ausführungsbeispiel gemäß der Fig. 2 dadurch unterscheidet, daß an der Laufseite 22, also der Innenseite des Transportbandes 1, ein Veloursgewebe 23 angeordnet ist. Dieses Veloursgewebe 23 besitzt eine nach außen gerichtete Flordecke, mit der das Transportband 1 auf Antriebs- oder Umlenkrollen läuft. Diese Flordecke ermöglicht eine hohe Laufruhe. Durch Verwendung leitfähiger Garne für dieses Veloursgewebe 23 kann zudem eine elektrostatische Aufladung des Transportbandes 1 vermieden werden.

Fig. 5 zeigt ein fünftes Ausführungsbeispiel des Transportbandes 1 mit einer Verstärkungseinlage, bestehend aus zwei benachbart und mit Abstand zueinander angeordneten Gewebeeinlagen 9. Beide Gewebeeinlagen 9 erstrecken sich in Längsrichtung des Transportbandes 1 und besitzen den gleichen Aufbau wie zu den Figuren 1, 2 und 3 beschrieben. Die benachbart zueinander angeordneten Bahnen der Gewebeeinlagen 9 können desweiteren so kombiniert werden, daß Gewebeeinlagen mit verschiedener Anbindung, Länge und Dichte der Polfäden 12 sich abwechseln können. Desweiteren besteht die Kunststoffbahn 8 aus einer oberen Deckschicht, einer unteren Deckschicht und einer mittleren Deckschicht. Hinsichtlich des Aufbaues der Gewebeeinlage 9 und der Kunststoffbahnen 8 wird auf die vorstehenden Ausführungsbeispiele verwiesen.

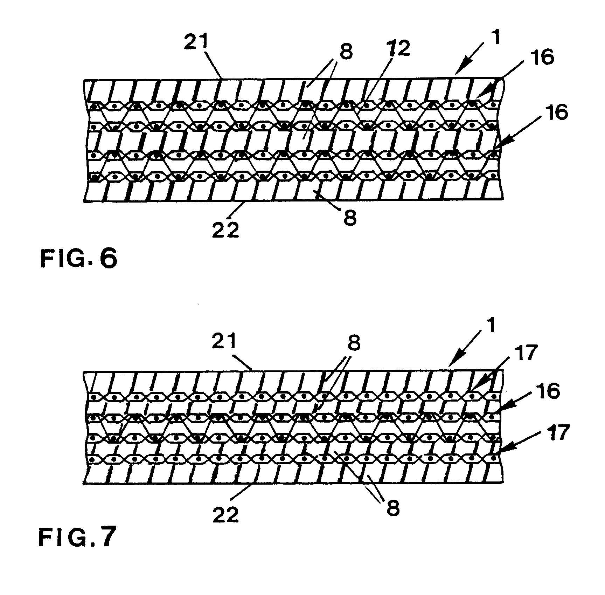

Fig. 6 zeigt ein sechstes Ausführungsbeispiel des Transportbandes 1 mit ebenfalls einer Verstärkungseinlage, die zwei benachbart und mit Abstand zueinander angeordnete Gewebeeinlagen 16 umfaßt. Von dem fünften Ausführungsbeispiel des Transportbandes 1 gemäß Fig. 5 unterscheidet sich das sechste Ausführungsbeispiel des Transportbandes 1 dadurch, daß die Gewebeeinlagen 16 Polfäden 12 mit einer Standhöhe von ca. 1 bis 1,5 mm zwischen dem Ober- und Untergewebe 10 und 11 angeordnet sind. Obergewebe 10 und Untergewebe 11 gelangen hier ebenfalls in einen lagestabilen Wirkeingriff bei gleichzeitig guter Ableitung des Krimpeffekts aufgrund unterschiedlicher Biegebeanspruchungen von Obergewebe 10 und Untergewebe 11 an den Umkehrstellen des Transportbandes 1. Nach Art einer Rückstellkraft wirken hier die Polfäden 12 auf die Anordnung von Ober- und Untergewebe 10 und 11. Vorzugsweise sind dabei die Polfäden 12 dicht zwischen Obergewebe 10 und Untergewebe 11 der jeweiligen Gewebeeinlage 16 angeordnet.

Fig. 7 zeigt schließlich ein siebtes Ausführungsbeispiel des Transportbandes 1 mit einer Verstärkungseinlage in Form der Gewebeeinlage 16 (gemäß Fig. 6) und zwei Gewebebahnen 17 aus einem Flachgewebe, die die Gewebeeinlage 16 sandwichartig einschließen. Bei den Gewebebahnen 17 handelt es sich um herkömmlich bekannte Flachgewebe für Transportbänder. Eine derartige sandwichartige Einbettung der Verstärkungseinlage in Form eines Doppelpolgewebes kann auch mit einer Gewebeeinlage 9, wie sie in Fig. 1 beschrieben wurde, erfolgen.

Bei allen vorstehend beschriebenen Ausführungsbeispielen erstrecken sich die Verstärkungseinlagen in Form von Doppelpol-Gewebeeinlagen in Längsrichtung des Transportbandes 1 und im wesentlichen über die Breite des Transportbandes 1.

Desweiteren kann bei den vorstehend beschriebenen Verstärkungseinlagen in Form einer Doppelpol-Gewebeeinlage 9, 15 oder 16 die Art und Weise, wie Kette 13 und Schuß 14 im Gewebe miteinander verkreuzt sind, geeignet gewählt werden. Neben der Leinwandbindung sind Bindungen mit Fadenflottungen, wie z.B. Panamabindung, Atlasbindung oder Köperbindung, einsetzbar. Insbesondere zur Einwebung einer hohen Schußzahl im Hinblick auf die Quersteifigkeit wird eine Bindung mit Fadenflottungen bevorzugt.


**Patentansprüche**

1. Transportband bestehend aus einer gewebeverstärkten Kunststoffbahn mit einer in Längsrichtung sich erstreckenden textilen Verstärkungseinlage aus sich kreuzenden Kett- und Schußfäden, dadurch gekennzeichnet, daß die Verstärkungseinlage gebildet wird von einem Festigkeitsträger in Form eines Doppelpolgewebes (9, 15, 16) mit Ober- und Untergewebe (10, 11), die durch niedrige, an den Schußfaden abgebundene Polfäden (12) derart zusammengezogen sind, daß eine zugfeste Einheit aus Ober- und Untergewebe (10, 11) gebildet wird, wobei die Polfäden (12) bei Biegebeanspruchung des Transportbandes eine in Kettrichtung rückstellbare, geringe Beweglichkeit von Ober- und Untergewebe (10, 11) gegeneinander zulassen.

2. Transportband nach Anspruch 1, dadurch gekennzeichnet, daß Ober- und Untergewebe (10, 11) abstandslos aufeinanderliegend verbunden sind.

3. Transportband nach Anspruch 1 oder 2, dadurch gekennzeichnet, daß die Länge der Polfäden (12) zwischen zwei Abbindungsstellen bei 0,1 bis 2 mm liegt.

4. Transportband nach einem der Ansprüche 1 bis 3, dadurch gekennzeichnet, daß die Kettfäden (13) aus Multifilamentgarnen und die Schußfäden (14) aus Monofilamentgarnen bestehen.

5. Transportband nach einem der Ansprüche 1 bis 4, dadurch gekennzeichnet, daß Ober- und Untergewebe (10, 11) aus in Leinwandbindung verkreuzten Kett- und Schußfäden (13, 14) bestehen, und die Polfäden (12) durch Schuß Polauf- oder Poldurchbindung abgebunden sind.

6. Transportband nach einem der Ansprüche 1 bis 5, dadurch gekennzeichnet, daß in Schußrichtung benachbart zueinander angeordnete Polfäden (12) versetzt abgebunden sind.

7. Transportband nach einem der Ansprüche 1 bis 6, dadurch gekennzeichnet, daß die Doppelpolgewebe (9, 15, 16) aus synthetischen Fasern oder Mischfasern bestehen.

8. Transportband nach einem der Ansprüche 1 bis 7, dadurch gekennzeichnet, daß die Laufseite von einer nach außen gerichteten Flordecke eines Veloursgewebes (23) gebildet wird.

9. Transportband nach Anspruch 8, dadurch gekennzeichnet, daß die Flordecke Noppen aus leitfähigen Garnen aufweist.

10. Transportband nach einem der Ansprüche 1 bis 9, dadurch gekennzeichnet, daß Garne mit einem Gewicht von 10 bis 600 tex, vorzugsweise 100 bis 180 tex, verwendet werden.

11. Transportband nach einem der Ansprüche 1 bis 10, dadurch gekennzeichnet, daß mehrere mit Abstand zueinander angeordnete Doppelpolgewebe (9, 15, 16) vorgesehen sind.

12. Transportband nach einem der Ansprüche 1 bis 11, dadurch gekennzeichnet, daß zusätzliche in Längsrichtung sich erstreckende Flachgewebeeinlagen (17) vorgesehen sind, die das Doppelpolgewebe (9, 15, 16) sandwichartig einbetten.

## Claims

1. Conveyor belt consisting of a fabric-reinforced web of plastics material having a textile reinforcing insert, extending in a longitudinal direction, of warp and weft threads crossing one another, characterised in that the reinforcing insert is formed by a strength component in the form of a double pile cloth (9, 15, 16) with upper and lower cloth (10, 11) which, by means of low pile threads (12) woven onto the weft threads, are pulled together in such a way that a tension-resistant unit of upper and lower cloth (10, 11) is formed, the pile threads (12) allowing, when the conveyor belt is subjected to bending stress, a slight movability of the upper and lower cloth (10, 11) with respect to one another which is restorable in the warp direction.

2. Conveyor belt according to claim 1, characterised in that upper and lower cloth (10, 11) are connected so that they lie upon each other with no spacing.

3. Conveyor belt according to claim 1 or 2, characterised in that the length of the pile threads (12) between two weaving points is around 0.1 to 2 mm.

4. Conveyor belt according to one of claims 1 to 3, characterised in that the warp threads (13) consist of multifilament yarns and the weft threads (14) of monofilament yarns.

5. Conveyor belt according to one of claims 1 to 4, characterised in that upper and lower cloth (10, 11) consist of warp and weft threads (13, 14) crossed in a plain weave, and the pile threads (12) are woven in by weft pile on weaving or pile through-weaving.

6. Conveyor belt according to one of claims 1 to 5, characterised in that in the weft direction, pile threads (12) arranged adjacent to one another are woven in so that they are staggered.

7. Conveyor belt according to one of claims 1 to 6, characterised in that the double pile cloths (9, 15, 16) consist of synthetic fibres or mixed fibres.

8. Conveyor belt according to one of claims 1 to 7, characterised in that the running side is formed of an outwardly-directed pile side of a velour cloth (23).

9. Conveyor belt according to claim 8, characterised in that the pile side has naps of conductive yarns.

10. Conveyor belt according to one of claims 1 to 9, characterised in that yarns having a weight of from 10 to 600 Tex, preferably 100 to 180 Tex, are used.

11. Conveyor belt according to one of claims 1 to 10, characterised in that a plurality of double pile cloths (9, 15, 16) are provided, arranged at a distance from one another.

12. Conveyor belt according to one of claims 1 to 11, characterised in that additional flat cloth inserts (17) extending in a longitudinal direction are provided which sandwich the double pile cloth (9, 15, 16) between them.

## Revendications

1. Bande transporteuse constituée d'une nappe en matière plastique renforcée par un tissu, comportant une armature de renfort textile s'étendant en direction longitudinale et se composant de fils de chaîne et de fils de trame qui se croisent, caractérisée en ce que l'armature de renfort est constituée par un support de résistance se présentant sous la forme d'un tissu de poil double (9, 15, 16) comportant un tissu supérieur et un tissu inférieur (10, 11), qui sont rassemblés au moyen de fils de poil (12) inférieurs liés aux fils de trame, de manière à former un ensemble résistant à la traction constitué du tissu supérieur et du tissu inférieur (10, 11), les fils de poil (12) autorisant, lors d'une sollicitation en flexion de la bande transporteuse, une légère mobilité réversible dans la direction de la chaîne, du tissu supérieur et du tissu inférieur (10, 11) l'un par rapport à l'autre.

2. Bande transporteuse selon la revendication 1, caractérisée en ce que le tissu supérieur et le tissu inférieur (10, 11) sont reliés entre eux de manière à reposer l'un sur l'autre sans espace intermédiaire.

3. Bande transporteuse selon la revendication 1 ou 2, caractérisée en ce que la longueur des fils de poil (12) entre deux points de liage est comprise entre 0,1 et 2 mm.

4. Bande transporteuse selon l'une des revendications 1 à 3, caractérisée en ce que les fils de chaîne (13) sont constitués de fils à filaments multiples, et les fils de trame (14) de fils à filament unique.

5. Bande transporteuse selon l'une des revendications 1 à 4, caractérisée en ce que le tissu supérieur et le tissu inférieur (10, 11) sont constitués de fils de chaîne et de fils de trame (13, 14) croisés selon une armure-toile, et les fils de poil (12) sont liés de manière à être pris ou sautés par la trame.

6. Bande transporteuse selon l'une des revendications 1 à 5, caractérisée en ce que des fils de poil (12) voisins dans la direction de la trame sont liés de manière décalée.

7. Bande transporteuse selon l'une des revendications 1 à 6, caractérisée en ce que les tissus de poil double (9, 15, 16) sont réalisés en fibres synthétiques ou en fibres mélangées.

8. Bande transporteuse selon l'une des revendications 1 à 7, caractérisée en ce que la face de roulement est constituée à la surface à poils, dirigée vers l'extérieur, d'un tissu velours (23).

9. Bande transporteuse selon la revendication 8, caractérisée en ce que la surface à poils présente des touffes de fils électriquement conducteurs.

10. Bande transporteuse selon l'une des revendications 1 à 9, caractérisée en ce que l'on utilise des fils d'un poids de 10 à 600 tex, de préférence de 100 à 180 tex.

11. Bande transporteuse selon l'une des revendications 1 à 10, caractérisée en ce que sont prévus plusieurs tissus de poil double (9, 15, 16) disposés à distance les uns des autres.

12. Bande transporteuse selon l'une des revendications 1 à 11, caractérisée en ce que sont prévues des armatures supplémentaires de tissu plat (17) s'étendant dans la direction longitudinale, et enserrant en sandwich le tissu de poil double (9, 15, 16).

FIG. 1

FIG. 2

FIG. 3

FIG. 4

FIG. 5

FIG. 6

FIG. 7